(19) Europäisches Patentamt
European Patent Office
Office européen des brevets

(11) **EP 4 109 431 A1**

(12) **EUROPEAN PATENT APPLICATION**

(43) Date of publication:
**28.12.2022 Bulletin 2022/52**

(21) Application number: **22181838.8**

(22) Date of filing: **29.06.2022**

(51) International Patent Classification (IPC):
**G08G 1/01** *(2006.01)* **G06N 20/00** *(2019.01)*

(52) Cooperative Patent Classification (CPC):
**G06N 20/00; G08G 1/0112; G08G 1/0133; G08G 1/0145**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 CN 202110740785**

(71) Applicant: **Apollo Intelligent Connectivity (Beijing) Technology Co., Ltd.**
**Beijing 100176 (CN)**

(72) Inventor: **SHEN, Donghui**
**Beijing, 100176 (CN)**

(74) Representative: **Hoffmann Eitle**
**Patent- und Rechtsanwälte PartmbB**
**Arabellastraße 30**
**81925 München (DE)**

(54) **METHOD, APPARATUS AND STORAGE MEDIUM OF DETERMINING STATE OF INTERSECTION**

(57) A method and an apparatus of determining a state of an intersection, and a storage medium are provided, which relate to a field of an artificial intelligence technology, in particular to fields of an intelligent transportation technology, a computer vision technology, and a machine learning technology. The intersection is formed by a convergence of a plurality of road segments including at least two driving-in road segments. The method includes: determining attribute data and traffic data of each of the at least two driving-in road segments; determining a congestion parameter of each driving-in road segment based on the attribute data and the traffic data; determining a state of each driving-in road segment by using the congestion parameter of each driving-in road segment as an input of a predetermined multi-classification model; and determining the state of the intersection based on the states of the at least two driving-in road segments.

200

```
┌─────────────────────────────────────────────┐
│ Attribute data and traffic data of each      │
│ driving-in road segment of the at least two   │──S210
│ driving-in road segments are determined       │
└─────────────────────────────────────────────┘
                      │
┌─────────────────────────────────────────────┐
│ A congestion parameter of each driving-in     │
│ road segment is determined based on the       │──S220
│ attribute data and the traffic data           │
└─────────────────────────────────────────────┘
                      │
┌─────────────────────────────────────────────┐
│ A state of each driving-in road segment is    │
│ determined by using the congestion parameter  │
│ of the each driving-in road segment as an     │──S230
│ input of a predetermined multi-classification │
│ model                                         │
└─────────────────────────────────────────────┘
                      │
┌─────────────────────────────────────────────┐
│ The state of the intersection is determined   │
│ based on the states of the at least two       │──S240
│ driving-in road segments                      │
└─────────────────────────────────────────────┘
```

FIG. 2

EP 4 109 431 A1

**Description**

TECHNICAL FIELD

The present disclosure relates to a field of an artificial intelligence technology, in particular to a field of an intelligent transportation technology, a field of a computer vision technology and a field of a machine learning technology, and more specifically to a method and an apparatus of determining a state of an intersection, and a storage medium.

BACKGROUND

With a development of electronic technology, all walks of life tend to use artificial intelligence technology for data processing, so as to achieve a continuous management of various scenarios.

In an intelligent transportation scenario, in order to reasonably carry out road planning and traffic signal control, it is generally necessary to acquire states of an intersection formed by roads within various time periods. For example, a video signal acquired for each intersection may be decoded, and the state of the intersection may be determined according to a processing result.

SUMMARY

A method and an apparatus of determining a state of an intersection, and a storage medium are provided, which may improve an accuracy.

According to an aspect of the present disclosure, a method of determining a state of an intersection is provided, wherein the intersection is formed by a convergence of a plurality of road segments including at least two driving-in road segments, and the method includes: determining attribute data and traffic data of each driving-in road segment of the at least two driving-in road segments; determining a congestion parameter of the each driving-in road segment based on the attribute data and the traffic data; determining a state of the each driving-in road segment by using the congestion parameter of the each driving-in road segment as an input of a predetermined multi-classification model; and determining the state of the intersection based on the states of the at least two driving-in road segments.

According to another aspect of the present disclosure, an apparatus of determining a state of an intersection is provided, wherein the intersection is formed by a convergence of a plurality of road segments including at least two driving-in road segments, and the apparatus includes a data determination module configured to determine attribute data and traffic data of each driving-in road segment of the at least two driving-in road segments; a parameter determination module configured to determine a congestion parameter of the each driving-in road segment based on the attribute data and the traffic data; a road segment state determination module configured to determine a state of the each driving-in road segment by using the congestion parameter of the each driving-in road segment as an input of a predetermined multi-classification model; and an intersection state determination module configured to determine the state of the intersection based on the states of the at least two driving-in road segments.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of determining the state of the intersection provided by the present disclosure.

According to another aspect of the present disclosure, a non-transitory computer-readable storage medium having computer instructions stored thereon is provided, wherein the computer instructions are configured to cause a computer to implement the method of determining the state of the intersection provided by the present disclosure.

According to another aspect of the present disclosure, a computer program product containing a computer program is provided, wherein the computer program, when executed by a processor, causes the processor to implement the method of determining the state of the intersection provided by the present disclosure.

It should be understood that content described in this section is not intended to identify key or important features in the embodiments of the present disclosure, nor is it intended to limit the scope of the present disclosure. Other features of the present disclosure will be easily understood through the following description.

BRIEF DESCRIPTION OF THE DRAWINGS

The accompanying drawings are used for better understanding of the solution and do not constitute a limitation to the present disclosure, wherein:

FIG. 1 shows a schematic diagram of an application scenario of a method and an apparatus of determining a state of an intersection according to an embodiment of the present disclosure;

FIG. 2 shows a flowchart of a method of determining a state of an intersection according to an embodiment of the present disclosure;

FIG. 3 shows a schematic diagram of determining a weighted congestion index according to an embodiment of the present disclosure;

FIG. 4 shows a schematic diagram of determining a congestion proportion coefficient according to an embodiment of the present disclosure;

FIG. 5 shows a schematic diagram of determining a continuous congestion length and a non-congestion length according to an embodiment of the present disclosure;

FIG. 6 shows a schematic diagram of determining a state of an intersection according to an embodiment of the present disclosure;

FIG. 7 shows a structural block diagram of an apparatus of determining a state of an intersection according to an embodiment of the present disclosure; and

FIG. 8 shows a block diagram of an electronic device for implementing a method of determining a state of an intersection according to an embodiment of the present disclosure.

## DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

The present disclosure provides a method of determining a state of an intersection. The intersection is formed by a convergence of a plurality of road segments including at least two driving-in road segments. The method includes a data determination stage, a parameter determination stage, a road segment state determination stage, and an intersection state determination stage. In the data determination stage, attribute data and traffic data of each driving-in road segment of the at least two driving-in road segments are determined. **In** the parameter determination stage, a congestion parameter of the each driving-in road segment is determined based on the attribute data and the traffic data. **In** the road segment state determination stage, a state of the each driving-in road segment is determined by using the congestion parameter of the each driving-in road segment as an input of a predetermined multi-classification model. In the intersection state determination stage, the state of the intersection is determined based on the states of the at least two driving-in road segments.

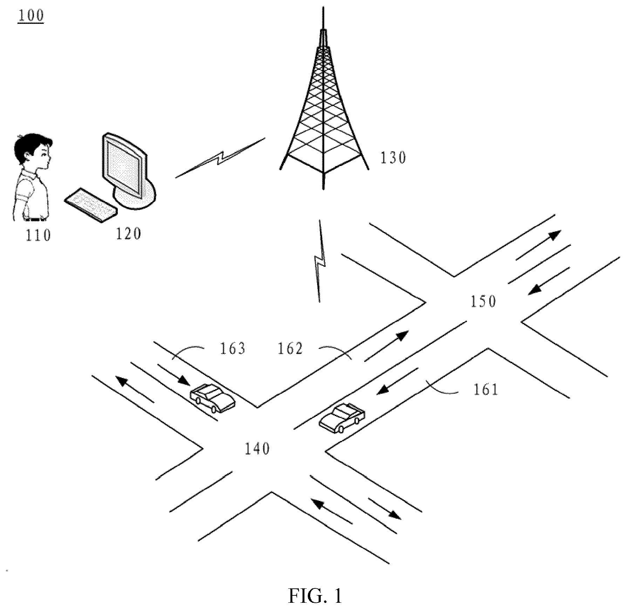

An application scenario of a method and an apparatus provided in the present disclosure will be described below with reference to FIG. 1.

FIG. 1 shows a schematic diagram of an application scenario of a method and apparatus of determining a state of an intersection according to an embodiment of the present disclosure.

As shown in FIG. 1, a scenario 100 in the embodiment of the present disclosure includes a monitor 110, a terminal 120, a communication base station 130, and a road traffic network. The road traffic network may include roads and an intersection formed by a convergence of roads. For example, in this scenario 100, the road traffic network includes at least intersection 140 and intersection 150. The intersection 140 is formed by a convergence of a road segment 161, a road segment 162 and a road segment 163 in the road traffic network.

The road segment in the embodiment of the present disclosure refers to a road segment, between two adjacent intersections, of a road. The road segments that converge to form an intersection may include a road segment for driving into the intersection and a road segment for driving out of the intersection. For example, the road segments that converge to form the intersection 140 include the road segments 161 and 163 etc. for driving into the intersection 140 and the road segment 162 etc. for driving out of the intersection 140.

For example, as shown in FIG. 1, a vehicle may be driven on a road segment used to form an intersection. The vehicle may be integrated with a navigation system; or a handheld terminal of a driver in the vehicle is installed with a navigation application. The navigation system or navigation application may upload real-time data to a background server through the communication base station 130. For example, the terminal 120 may request data from the background server through a network to acquire the data uploaded by the navigation system or navigation application, and analyze a state of each road segment used to form the intersection according to the data to determine the state of the intersection based on the state of each road segment. The monitor 110 may, for example, adjust a signal period and a green signal ratio of a traffic signal indicator light provided at the intersection according to a relationship between the state of the intersection and time, or may determine a reconstruction design scheme for the road according to the state.

For example, the terminal 120 may obtain the congestion parameter of each road segment used to form the intersection by analyzing the data uploaded by the navigation system or navigation application, and then analyze the congestion parameter by using the pre-trained multi-classification model, so as to obtain the state of each road segment.

For example, the terminal 120 may be, for example, a server, a desktop computer, a laptop portable computer, etc., with monitoring functions and information display functions. The terminal 120 may be installed with various client applications. The background server may be, for example, any server that supports an operation of the navigation system or navigation application, such as a server of a distributed system or a server combined with a block-chain.

It should be noted that the method of determining the state of the intersection provided by the embodiments of the present disclosure may generally be performed by the terminal 120. The apparatus of determining the state of the intersection provided by the embodiments of the present disclosure may be provided in the terminal 120.

It should be understood that the numbers and types of terminal, roads, vehicles and communication base station shown in FIG. 1 are merely illustrative. According to implementation needs, there may be any numbers and types of terminals, roads, vehicles and communication base stations.

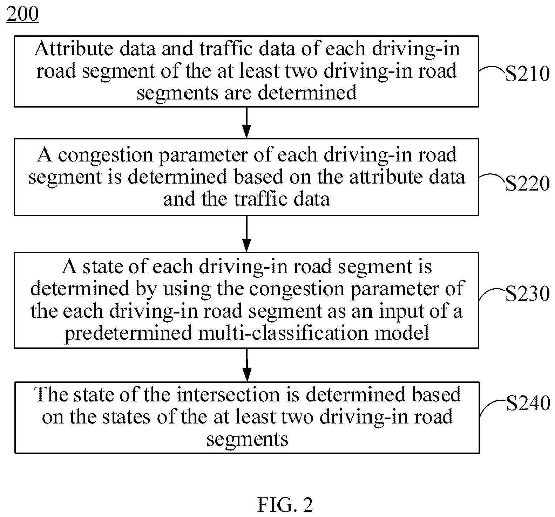

The method of determining the state of the intersection provided by the present disclosure will be described in detail below through FIG. 2 to FIG. 6 with reference to FIG. 1.

FIG. 2 shows a flowchart of a method of determining a state of an intersection according to an embodiment of the present disclosure.

As shown in FIG. 2, a method 200 of determining a state of an intersection in this embodiment may include operation S210 to operation S240. The intersection is formed by a convergence of a plurality of road segments including at least two driving-in road segments.

In operation S210, attribute data and traffic data of each driving-in road segment of the at least two driving-in road segments are determined.

According to the embodiments of the present disclosure, the traffic data of each driving-in road segment may be obtained by analyzing video data acquired by various monitoring devices on the road in real time. The traffic data may include, for example, the number of vehicles on a driving-in road segment, a position of a vehicle on a driving-in road segment, a driving speed of a vehicle on a driving-in road segment, a driving duration consumed by a vehicle passing through a driving-in road segment, and other information. A road network information may be acquired from a server which provides a service support to a map navigation client application. The road network information includes the attribute data of each driving-in road segment. The attribute data may include, for example, a length of each driving-in road segment, a start position and an end position of each driving-in road segment, etc.

According to the embodiments of the present disclosure, a vehicle position information uploaded by a navigation application and the road network information may also be acquired. The traffic data of each driving-in road segment may be determined based on the road network information and the vehicle position information. Specifically, the attribute data of each driving-in road segment may be located from the road network information. Then, the number of vehicles on each driving-in road segment and the positions of vehicles on each driving-in road segment, etc. are determined as the traffic data according to the vehicle position information. Different from a technical solution of determining the traffic data by analyzing the acquired video data, this embodiment may reduce a cost of determining the state of the intersection and improve an execution stability of the method of determining the state of the intersection.

According to the embodiments of the present disclosure, the traffic data may further include a congestion index determined based on the number of vehicles and the positions of the vehicles. A value range of the congestion index may depend on a setting rule of the navigation application. For example, the value range of the congestion index may be [0, 100]. According to the actual situation, 90% of the values of the congestion indexes of the road segments are less than or equal to 5, and the value of the congestion index may be greater than 10 only in a case of a severe congestion.

In operation S220, a congestion parameter of each driving-in road segment is determined based on the attribute data and the traffic data.

According to the embodiments of the present disclosure, an average speed of vehicles on each driving-in road segment may be determined according to the attribute data and the traffic data of the each driving-in road segment, and the average speed may be used as a congestion parameter of the each driving-in road segment. Alternatively, the traffic data may include a congestion index, which may be used as the congestion parameter in this embodiment.

According to the embodiments of the present disclosure, each driving-in road segment may be divided into at least one sub road segment based on a predetermined length, and the sub road segment may be equivalent to an arc Link used to store navigation path data. The predetermined length may be set according to the actual requirement, for example, set to 50m, 100m, etc., which is not limited in the present disclosure.

According to the embodiments of the present disclosure, the determined attribute data of each driving-in road segment may include attribute data of each sub road segment of the each driving-in road segment, and the traffic data of each driving-in road segment may include traffic data of each sub road segment of the each driving-in road segment. The embodiments may also be implemented to determine the congestion parameter of each driving-in road segment based on the attribute information and the traffic information of each sub road segment of the each driving-in road segment. For example, an average speed of vehicles on each sub road segment may be determined, and an average value of average speeds of vehicles on at least one sub road segment of each driving-in road segment may be determined as the congestion parameter of the each driving-in road segment. Alternatively, the embodiments may be implemented to calculate a weighted sum of the congestion indexes of the sub road segments of each driving-in road segment by using a ratio of the length of each sub road segment to the length of the each driving-in road segment as a weight, and determine the obtained weighted sum as the congestion index of the each driving-in road segment and as a congestion parameter.

It may be understood that the congestion parameter may include a congestion index, an average speed, an average driving duration, and other parameters that may reflect whether the road segment is congested or not, which is not limited in the present disclosure.

In operation S230, a state of each driving-in road segment is determined by using the congestion parameter of the each driving-in road segment as an input of a predetermined multi-classification model.

According to the embodiments of the present disclosure, the predetermined multi-classification model may be, for example, a deep learning model or a machine learning model. The machine learning model may be, for example, AdaBoost classifier, Logistic Regression Model, Random Forest (RF) Model or Gradient Boosting Decision Tree (GBDT) Model, etc.

In an embodiment, an ensemble learning model represented by RF model and GBDT model may be selected as the multi-classification model. Since the ensemble learning model includes a plurality of classifiers, an accuracy of the determined state of each driving-in road segment may be improved on the basis of reducing a training cost compared with the deep learning model.

According to the embodiments of the present disclosure, the output of the multi-classification model may be a probability vector representing a probability that each driving-in road segment is in each state of predetermined states. In this embodiment, a state corresponding to a maximum probability value may be determined as the state of each driving-in road segment. Alternatively, the output result of the multi-classification model may directly indicate the state of each driving-in road segment. In an embodiment, the predetermined state may include at least one of an overflow state, a congestion state, a super-saturation state, an idle state, etc. The predetermined state may be set according to actual desires, which is not limited in the present disclosure.

According to the embodiments of the present disclosure, the multi-classification model may be trained in advance. The congestion parameter of each driving-in road segment in each historical period may be determined using the attribute data and the historical traffic data of the each driving-in road segment which forms the intersection, and an actual state of the each driving-in road segment in the historical period may be used as a label of the congestion parameter, so as to obtain sample data of the multi-classification model. Then, the multi-classification model is trained based on the sample data. It may be understood that a method of training the multi-classification model is similar to that in a related art, which will not be described in detail here.

The actual state of each driving-in road segment in the historical period may be obtained, for example, by analyzing a video frame for the each driving-in road segment captured by a video capturing device at the intersection. For example, the number of queuing vehicles RL on each driving-in road segment when the red light is on may be obtained by analyzing the video frame. The actual state of each driving-in road segment may be determined according to the number of queuing vehicles RL when the red light is on. For example, if RL is between 1 and 4, it may be determined that the actual state of the driving-in road segment is the super-saturation state. If RL is greater than or equal to 4, it may be determined that the actual state of the driving-in road segment is the congestion state. If RL is less than or equal to 1, it may be determined that the actual state of the driving-in road segment is the idle state. If the queuing vehicles occupy the whole driving-in road segment when the red light is on, it may be determined that the actual state of the driving-in road segment is the overflow state. Alternatively, the actual state of each driving-in road segment may also be determined by analyzing the video frame to determine whether the queuing vehicles may completely pass in a green light period or not. For example, if the queuing vehicles fail to completely pass, the actual state is the congestion state. If the queuing vehicles just pass completely, the actual state is the super-saturation state. If a remaining duration of the green light after the queuing vehicles completely pass is greater than a predetermined duration, the actual state is the idle state. It may be understood that the above-mentioned method of determining the actual state is only an example to facilitate the understanding of the present disclosure, which is not limited by the present disclosure.

In operation S240, the state of the intersection is determined based on the states of the at least two driving-in road segments.

According to the embodiments of the present disclosure, the states of the at least two driving-in road segments may be statistically analyzed, and the state of the intersection may be determined according to a statistical result.

For example, if the state of the road segment includes one of the idle state, the super-saturation state, the congestion state or the overflow state, when the at least two driving-in road segments include a road segment in the overflow state, it may be determined that the state of the intersection includes the overflow state. When each of the at least two driving-in road segments is in the congestion state or the overflow state, it is determined that the state of the intersection includes the congestion state. When the at least two driving-in road segments are not in the idle state and the at least two driving-in road segments include a road segment in the super-saturation state, it is determined that the state of the intersection includes the super-saturation state. When the at least two driving-in road segments include a first road segment in the idle state and a second segment not in the idle state, it is determined that the state of the intersection includes an imbalance state. When the at least two driving-in road segments include a driving-in road segment in the idle state, it is determined that the state of the intersection includes the idle state. It may be understood that the intersection may be in two or more states at the same time. For example, if the driving-in road segments that converge to form the intersection include a driving-in road segment in the idle state and a driving-in road segment in the overflow state, the state of the intersection may include the idle state, the overflow state and the imbalance state. If the driving-in road segments that converge to form the intersection include a driving-in road segment in the idle state and a driving-in road segment in the super-saturation state, the state of the intersection may include the idle state and the imbalance state.

It may be understood that the above-mentioned method of determining the state of the intersection based on the states of at least two driving-in road segments is only an example, which is not limited by the present disclosure. For example, when the at least two driving-in road segments are in the super-saturation state, it is determined that the state of the intersection includes the super-saturation state. If the at least two driving-in road segments only include a road segment in the super-saturation state and a road segment in the congestion state, it is determined that the intersection is in the congestion state.

According to the embodiments of the present disclosure, for example, a real-time state of the intersection may be determined for traffic data of each real-time window according to a predetermined time window. In this way, even if the navigation Internet big data fail to acquire the traffic data at each time instant, the state of the intersection may be determined accurately. Accordingly, it is convenient to reduce a cost of acquiring the traffic data and improve a stability of acquiring the traffic data. The predetermined time window may be, for example, 2 min, 5 min, etc., which is not limited in the present disclosure.

The embodiments of the present disclosure may be implemented to determine the congestion index based on the traffic data and the attribute data, and then determine the state of the road segment by using the multi-classification model based on the congestion index. Different from the technical solution of determining the state of the road segment based on a fixed standard in the related art, the present disclosure may improve a flexibility of determining the state of the road segment, and therefore improve the accuracy of the determined road segment state and intersection state.

By dividing the driving-in road segment forming the intersection into at least one sub road segment and determining a traffic condition information of the driving-in road segment through the analysis of the traffic data and the attribute data of each sub road segment, the embodiments of the present disclosure may be implemented to improve the accuracy of the determined traffic condition information. On this basis, the accuracy of the determined intersection state may be improved, which may facilitate an effectiveness of a subsequent traffic control and improve a public experience.

According to the embodiments of the present disclosure, considering that the congestion situations of the road segment are generally different in different time periods, the embodiments may be implemented to determine a time-related congestion feature value as the congestion parameter when determining the congestion parameter of each driving-in road segment. Specifically, in this embodiment, a mapping relationship between a time period and a congestion feature value may be pre-constructed. When determining the congestion parameter of each driving-in road segment, a time period corresponding to the traffic data may be determined as a target time period from a plurality of predetermined time periods in the mapping relationship. Then, the congestion feature value having a mapping relationship with the target time period is determined as the congestion parameter.

The mapping relationship between the time period and the congestion feature value may be set according to a result of a pre-investigation. For example, the mapping relationship between the time period and the congestion feature value may be shown in the following table.

| Time period | Congestion feature value |
|---|---|
| Weekdays - morning and evening rush hours (7:00-9:00, 17:00-19:00) | 10 |
| Weekdays - non-rush hours (0:00-7:00, 9:00-17:00, 19:00-0:00) | 4 |
| Holidays and weekends - morning and evening rush hours (7:00-9:00, 17:00-19:00) | 6 |
| Holidays and weekends - non-rush hours (0:00-7:00, 9:00-17:00, 19:00-0:00) | 3 |

It may be understood that the above-mentioned mapping relationship table between the time period and the congestion feature value is only an example to facilitate the understanding of the present disclosure, which is not limited by the present disclosure.

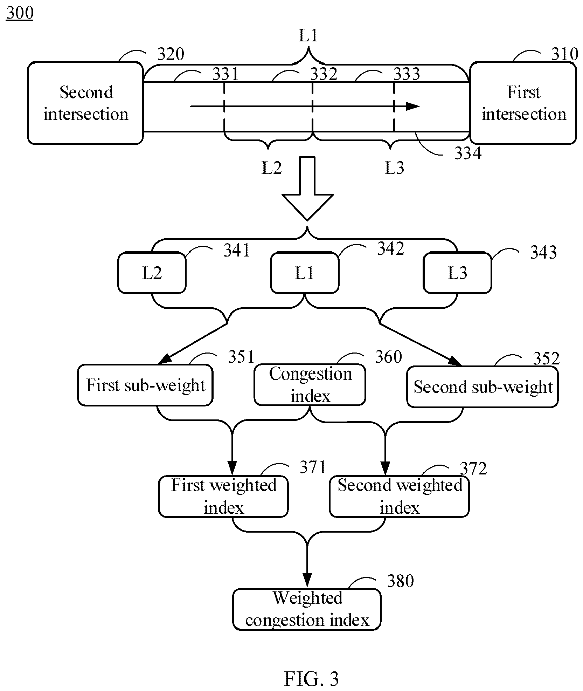

FIG. 3 shows a schematic diagram of determining a weighted congestion index according to an embodiment of the present disclosure.

According to the embodiments of the present disclosure, the above-mentioned congestion parameter of each driving-in road segment may include, for example, a weighted congestion index, which is obtained by a weighted summation of the congestion indexes of at least one sub road segment of each driving-in road segment. In this way, the accuracy of the determined congestion index of the driving-in road segment may be improved, and therefore the accuracy of the determined intersection state may be improved.

According to the embodiments of the present disclosure, in a process of the weighted summation, a weight of the congestion index of each sub road segment may be determined based on the attribute data of the each sub road segment. For example, in the operation of determining the weighted congestion index, a congestion weight of each sub road segment with respect to the driving-in road segment may be determined for the each sub road segment of the driving-in road segment based on the attribute data of the each sub road segment. Then, the weighted congestion index may be determined based on the congestion weight and the congestion index of each sub road segment. That is, the congestion weight of each sub road segment with respect to the driving-in road segment is used as the weight of the congestion index of the each sub road segment when calculating the weighted sum, and the weighted congestion index is obtained by weighting. The congestion weight may be determined according to the length in the attribute data, because the greater the length of the sub road segment, the greater the impact of the congestion index on the traffic condition of the whole driving-in road segment. Alternatively, the congestion weight may be determined according to a distance, in the attribute data, between the sub road segment and the intersection, because the closer the sub road segment is to the intersection, the more the congestion index is affected by a signal period of the traffic signal indicator light at the intersection. It may be understood that the above-mentioned method of determining the congestion weight is only an example to facilitate the understanding of the present disclosure. The congestion weight may also be determined according to any data contained in the attribute data, which is not limited in the present disclosure.

For example, when determining the congestion weight, both the length of the sub road segment and the position of the sub road segment may be taken into account, so that the determined weighted congestion index may accurately reflect the congestion condition of the road segment. For example, a first sub-weight of each sub road segment with respect to the driving-in road segment may be determined based on the length of the each sub road segment. A second sub-weight of each sub road segment with respect to the driving-in road segment may be determined based on the position of the each sub road segment. An average value of the first sub-weight and the second sub-weight may be determined as the congestion weight. Alternatively, a weighted sum of the first sub-weight and the second sub-weight may be calculated based on a preset weight, so as to obtain the congestion weight. Alternatively, the congestion weight includes the first sub-weight and the second sub-weight.

For example, as shown in FIG. 3, when determining the second sub-weight based on the position of the sub road segment, the embodiment 300 may be implemented to determine a distance between the position of the sub road segment and the position of the intersection, and determine the second sub-weight according to the distance. For example, for the first intersection 310, the driving-in road segment includes a road segment between the first intersection 310 and the second intersection 320, and the road segment has a length of L1. The road segment includes a sub road segment 331, a sub road segment 332, a sub road segment 333 and a sub road segment 334. The sub road segment 332 has a length of L2, and a distance between the position of the sub road segment 332 and the position of the first intersection 310 is L3. When determining the congestion weight of the sub road segment 332 with respect to the road segment, a length L2 341, a length L1 342 and a length L3 343 are required. For example, a ratio of L2 to L1 may be used as the first sub-weight 351, and a ratio of L3 to L1 may be used as the second sub-weight 352. Accordingly, the congestion weight of the sub road segment 332 with respect to the road segment including the sub-road segment 332 includes the first sub-weight 351 and the second sub-weight 352.

According to the embodiments of the present disclosure, when determining the weighted congestion index, a first weighted index 371 may be determined based on the first sub-weight 351 of the sub road segment 332 with respect to the driving-in road segment and the congestion index 360 of the sub road segment 332. Further, a second weighted index 372 may be determined based on the second sub-weight 352 of the sub road segment 332 with respect to the driving-in road segment and the congestion index 360 of the sub road segment 332. A weighted congestion index 380 is determined based on the first weighted index 371 and the second weighted index 372.

For example, a weighted sum of the congestion indexes of the sub road segments of each driving-in road segment may be determined based on the first sub-weights, so as to obtain a first weighted index. A weighted sum of the congestion indexes of the sub road segments of each driving-in road segment may be determined based on the second sub-weights, so as to obtain a second weighted index. For example, the first weighted index may be obtained by using the first sub-weights as the weights of the congestion indexes of the sub road segments. The second weighted index may be obtained by using the second sub-weights as the weights of the congestion indexes of the sub road segments.

For example, an average value of the first weighted index 371 and the second weighted index 372 may be determined as a weighted congestion index 380. Alternatively, a weighted sum of the first weighted index 371 and the second weighted index 372 may be calculated based on the preset weight, and the weighted sum may be determined as the weighted congestion index.

In an embodiment, each driving-in road segment includes n sub road segments, an $i^{th}$ sub road segment among the $n$ sub road segments has a length of $LKL$, a distance between the $i^{th}$ sub road segment and the intersection is D, the congestion index of the $i^{th}$ sub road segment is $LKI$, and the each driving-in road segment has a total length of $LL$. Then the first sub-weight of the $i^{th}$ sub road segment with respect to the each driving-in road segment may be expressed as $LKLP=LKL/LL$, and the second sub-weight of the $i^{th}$ sub road segment with respect to the each driving-in road segment may be expressed as $LKPP=D/LL$. The first weighted index $LKLI_{avg}$, the second weighted index $LKPI_{avg}$ and the weighted congestion index $LKI_{avg}$ may be respectively expressed as:

$$LKLI_{avg} = \sum_{i=1}^{n} LKLP_i * LKI_i;$$

$$LKPI_{avg} = \sum_{i=1}^{n} LKPP_i * LKI_i;$$

$$LKI_{avg} = (LKPI_{avg} + LKLI_{avg}) / 2.$$

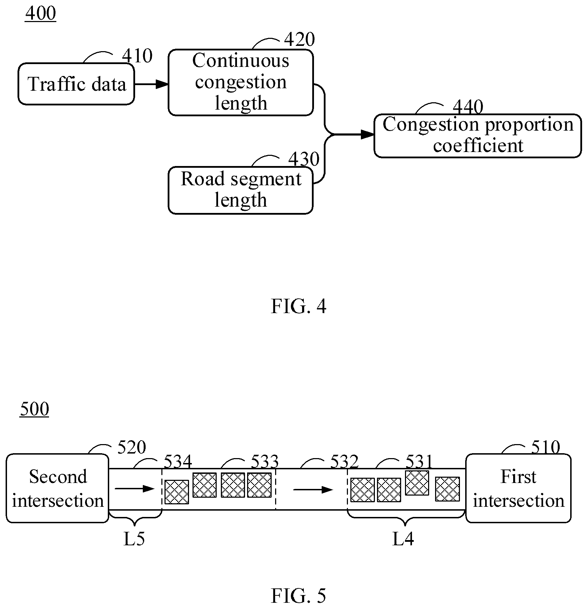

FIG. 4 shows a schematic diagram of determining a congestion proportion coefficient according to an embodiment of the present disclosure.

According to the embodiments of the present disclosure, the above-mentioned congestion parameter of each driving-in road segment may include, for example, a congestion proportion coefficient, which may be a ratio of a length of a congestion region in the driving-in road segment to the total length of the driving-in road segment. As a region where the queuing vehicles are located in the road segment is generally a congestion region, the congestion proportion coefficient may also be a ratio of a vehicle queuing length to the total length of the driving-in road segment.

In an embodiment, if a driving-in road segment is very long, the congestion region of the driving-in road segment may include a plurality of regions that are discontinuous, and only a continuous congestion region may reflect the state of the intersection. Therefore, the congestion proportion coefficient may be determined according to a ratio of a length of the continuous congestion region to the length of the driving-in road segment. For example, as shown in FIG. 4, the embodiment 400 may be implemented to determine a continuous congestion length 420 of each driving-in road segment based on the traffic data 410 of the each driving-in road segment. The continuous congestion length 420 is the length of the continuous congestion region. Then, a ratio of the continuous congestion length 420 to the length 430 of the each driving-in road segment is determined as the congestion proportion coefficient 440. Through this method, an accuracy of the determined congestion proportion coefficient may be improved, so that the congestion proportion coefficient may better reflect an influence of the signal period of the traffic signal indicator light at the intersection of the road segments on the states of the road segments.

According to the embodiments of the present disclosure, the continuous congestion region may be, for example, a congestion region close to the intersection, so that the congestion proportion coefficient may more accurately reflect the influence of the signal period of the traffic signal indicator light at the intersection formed by the road segments on the states of the road segments. In this case, a principle of determining the continuous congestion length is described later and will not be described in detail here.

FIG. 5 shows a schematic diagram of determining a continuous congestion length and a non-congestion length according to an embodiment of the present disclosure.

According to the embodiments of the present disclosure, when determining the continuous congestion length, for example, congestion regions in each driving-in road segment may be determined. After the congestion regions are determined, a distance between an end position of a first region and the intersection is determined as the continuous congestion length, where the first region is one of the congestion regions closest to the intersection. When the driving-in road segment is divided into at least one sub road segment, the congestion regions may be determined according to the traffic information of each sub road segment of the driving-in road segment, and specifically, may be determined according to, for example, a distance between vehicles driving on each sub road segment, a speed of a vehicle driving on each sub road segment, a driving duration consumed by a vehicle to pass through each sub road segment. If the speed of the vehicle driving on the sub road segment is less than a predetermined speed, it may be determined that the region of the sub road segment is a congestion region. It may be understood that the determination of the congestion regions is similar to that in the related art, which is not limited in the present disclosure.

For example, as shown in FIG. 5, in an embodiment 500, for a first intersection 510, the driving-in road segment includes a road segment having a driving direction from a second intersection 520 to the first intersection 510. The road segment includes sub road segments 531 to 534. The determined congestion regions include a region where the sub road segment 531 is located and a region where the sub road segment 533 is located. Then, it may be determined that the sub road segment 531 has the congestion region closest to the first intersection 510, and the continuous congestion length is a distance L4 between an end position of the sub road segment 531 and the first intersection 510, that is, a length of the sub road segment 531.

According to the embodiments of the present disclosure, the above-mentioned congestion parameter may include, for example, a non-congestion length, so as to determine whether the state of the intersection includes an overflow state or not according to the non-congestion length. The non-congestion length may be a distance between an end position of a second region and an upstream intersection of the intersection, where the second region is one of the determined congestion regions farthest away from the intersection.

For example, for the driving-in road segment including the sub road segments 531 to 534, the upstream intersection of the first intersection 510 is the second intersection 520. In the congestion regions determined above, the congestion region farthest from the first intersection is the region where the sub road segment 533 is located. The non-congestion length is a distance L5 between an end position of the sub road segment 533 and the second intersection 520, that is, a length of the sub road segment 534.

It may be understood that in a sub road segment, some regions may be congestion regions and some regions may be non-congestion regions. In this case, it is determined that a position of a tail of a last vehicle at a speed less than a predetermined speed on the sub road segment is the end position of the congestion region. Here, the last vehicle is a vehicle, on the sub road segment, with the farthest distance from the first intersection 510. The above-mentioned method of determining the end position of the congestion region is only used as an example to facilitate the understanding of the present disclosure, and this method specifically corresponds to the method of determining the congestion region.

According to the embodiments of the present disclosure, when determining the state of the driving-in road segment, whether the state of the intersection includes an overflow state or not may also be effectively determined by considering the non-congestion length, so as to further improve the accuracy of the determined state of the intersection.

According to the embodiments of the present disclosure, the congestion parameter of each driving-in road segment may include, for example, at least one of the above-mentioned congestion parameters. For example, in an embodiment, the congestion parameter of each driving-in road segment may include the congestion feature value, the weighted congestion index, the congestion proportion coefficient, and the non-congestion length described above. When determining the state of each driving-in road segment, this embodiment may be implemented to combine these congestion parameters into a feature vector, use the feature vector as an input of the predetermined multi-classification model, and obtain the state of each driving-in road segment from the output result of the predetermined multi-classification model.

Taking the predetermined multi-classification model as a random forest as an example, a principle of obtaining the state of the driving-in road segment based on a plurality of congestion parameters is described below.

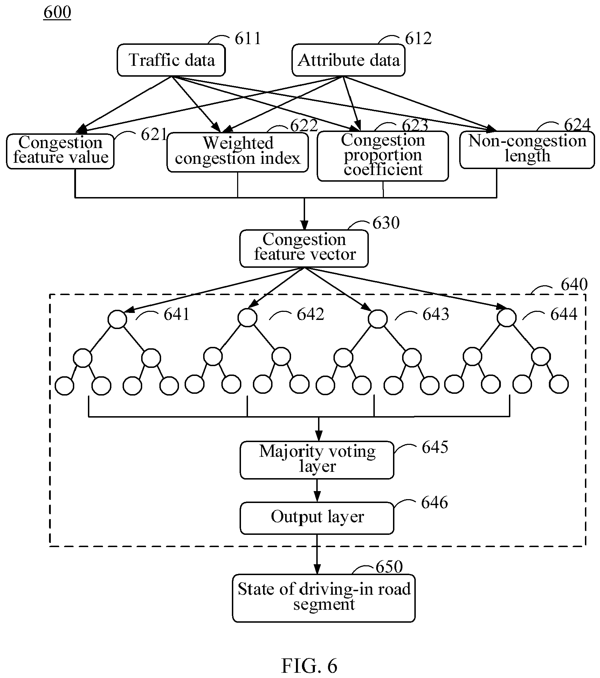

FIG. 6 shows a schematic diagram of determining a state of an intersection according to an embodiment of the present disclosure.

As shown in FIG. 6, in an embodiment 600, after obtaining traffic data 611 and attribute data 612 of each driving-in road segment, a method similar to the method described above may be adopted to respectively obtain the congestion parameters, including a congestion feature value 621, a weighted congestion index 622, a congestion proportion coefficient 623 and a non-congestion length 624, based on the traffic data 611 and the attribute data 612.

These congestion parameters may be combined to obtain a congestion feature vector 630 as the input vector of the multi-classification model. Then, by inputting the congestion feature vector 630 into a random forest model 640, a state 650 of the driving-in road segment may be output through the random forest model 640.

As shown in FIG. 6, the random forest model 640 may include a plurality of classifiers, a majority voting layer 645 connected to the plurality of classifiers, and an output layer 646 connected to the majority voting layer 645. The plurality of classifiers may include, for example, a classifier 641, a classifier 642, a classifier 643, and a classifier 644. The congestion feature vector 630 is used as the input of each classifier of the plurality of classifiers, and a classification result corresponding to the congestion feature vector 630 is obtained through the each classifier. Next, the classification results from the plurality of classifiers are counted through the majority voting layer 645. Classification results with the largest number among the plurality of classification results are determined as a final classification result, and the final classification result is output through the output layer 646. For example, if classification results from four classifiers include three classification results of congestion and one classification result of super-saturation, it may be determined that the state of the driving-in road segment is the congestion state. Each classifier may be, for example, a decision tree. The number of the plurality of classifiers may be set according to actual desires. For example, the number of the plurality of classifiers may be associated with the number of the congestion parameters in the congestion feature vector. The more the number of the congestion parameters, the more the number of the classifiers, so as to ensure the accuracy of the classification results.

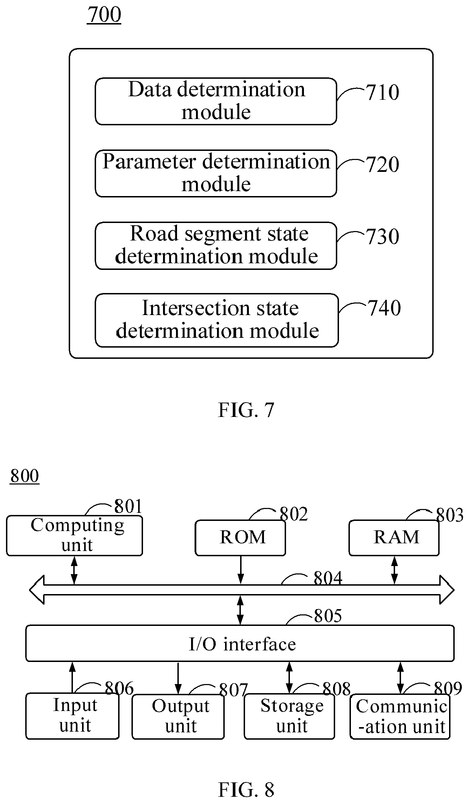

Based on the method of determining the state of the intersection provided by the present disclosure, the present disclosure further provides an apparatus of determining a state of an intersection. The apparatus will be described in detail below with reference to FIG. 7.

FIG. 7 shows a structural block diagram of an apparatus of determining a state of an intersection according to an embodiment of the present disclosure.

As shown in FIG. 7, an apparatus 700 of determining a state of an intersection in this embodiment may include a data determination module 710, a parameter determination module 720, a road segment state determination module 730 and an intersection state determination module 740. The intersection is formed by a convergence of a plurality of road segments including at least two driving-in road segments.

The data determination module 710 is used to determine attribute data and traffic data of each driving-in road segment of the at least two driving-in road segments. In an embodiment, the data determination module 710 may be used to execute the operation S210 described above, which will not be repeated here.

The parameter determination module 720 is used to determine a congestion parameter of each driving-in road segment based on the attribute data and the traffic data. In an embodiment, the parameter determination module 720 may be used to execute the operation S220 described above, which will not be repeated here.

The road segment state determination module 730 is used to determine a state of the each driving-in road segment by using the congestion parameter of the each driving-in road segment as an input of a predetermined multi-classification model. **In** an embodiment, the road segment state determination module 730 may be used to execute the operation S230 described above, which will not be repeated here.

The intersection state determination module 740 is used to determine the state of the intersection based on the states of the at least two driving-in road segments. In an embodiment, the intersection state determination module 740 may be used to execute the operation S240 described above, which will not be repeated here.

According to the embodiments of the present disclosure, the predetermined multi-classification model includes an ensemble learning model.

According to an embodiment of the present disclosure, the parameter determination module 720 includes a feature value determination sub-module for determining a time-related congestion feature value. The feature value determination sub-module may include a time period determination unit and a feature value determination unit. The time period determination unit is used to determine, from a plurality of predetermined time periods, a time period corresponding to the traffic data as a target time period. The feature value determination unit is used to determine a congestion feature value having a mapping relationship with the target time period based on a predetermined mapping relationship between a time period and a congestion feature value.

According to the embodiments of the present disclosure, each driving-in road segment of the at least two driving-in road segments includes at least one sub road segment; the attribute data of each driving-in road segment includes attribute data of each sub road segment of the driving-in road segment; the traffic data of each driving-in road segment includes traffic data of each sub road segment of the driving-in road segment, and the traffic data includes a congestion index. The parameter determination module 720 described above may include a weighted index determination sub-module for determining a weighted congestion index. The weighted index determination sub-module may include a weight determination unit and an index determination unit. The weight determination unit is used to determine, for each sub road segment of the driving-in road segment, a congestion weight of the each sub road segment with respect to the driving-in road segment, based on the attribute data of the each sub road segment. The index determination unit is used to determine a weighted congestion index based on the congestion weight and the congestion index of each sub road segment.

According to the embodiments of the present disclosure, the attribute data includes a length and a position. The weight determination unit described above may include, for example, a first weight determination sub-unit and a second weight determination sub-unit. The first weight determination sub-unit is used to determine a first sub-weight of each sub road segment with respect to the driving-in road segment based on the length of the each sub road segment. The second weight determination sub-unit is used to determine a second sub-weight of each sub road segment with respect to the driving-in road segment based on the position of the each sub road segment.

According to the embodiments of the present disclosure, the index determination unit may include: a first index determination sub-unit used to determine a weighted sum of the congestion indexes of the sub road segments of each driving-in road segment based on the first sub-weights, so as to obtain a first weighted index; a second index determination sub-unit used to determine a weighted sum of the congestion indexes of the sub road segments of each driving-in road segment based on the second sub-weights, so as to obtain a second weighted index; and a congestion index determination sub-unit used to determine the weighted congestion index based on the first weighted index and the second weighted index.

According to the embodiments of the present disclosure, the parameter determination module 720 may include a proportion coefficient determination sub-module used to determine a congestion proportion coefficient of each driving-in road segment. The proportion coefficient determination sub-module may include: a congestion length determination unit used to determine a continuous congestion length of each driving-in road segment based on the traffic data of the each driving-in road segment; and a proportion coefficient determination unit used to determine a ratio of the continuous congestion length to a length of the each driving-in road segment as the congestion proportion coefficient.

According to the embodiments of the present disclosure, the congestion length determination unit may include: a congestion region determination sub-unit used to determine congestion regions in each driving-in road segment based on the traffic information of the each driving-in road segment; and a congestion length determination sub-unit used to determine a distance between an end position of a first region and the intersection as the continuous congestion length, where the first region is one of the congestion regions closest to the intersection.

According to the embodiments of the present disclosure, the parameter determination module 720 may include a length determination sub-module used to determine a non-congestion length of each driving-in road segment. The length determination sub-module may include: a congestion region determination unit used to determine congestion regions in each driving-in road segment based on the traffic information of the each driving-in road segment; and a length determination unit used to determine a distance between an end position of a second region and an upstream intersection of the intersection as the non-congestion length, where the second region is one of the congestion regions farthest away from the intersection.

According to the embodiments of the present disclosure, the state of each driving-in road segment includes one of an idle state, a super-saturation state, a congestion state, or an overflow state. The intersection state determination module is used to determine the state of the intersection by at least one of: determining that the state of the intersection includes the overflow state, in response to the at least two driving-in road segments including a road segment in the overflow state; determining that the state of the intersection includes the congestion state, in response to each of the at least two driving-in road segments being in the congestion state or the overflow state; determining that the state of the intersection includes the super-saturation state, in response to the at least two driving-in road segments being not in the idle state and the at least two driving-in road segments including a road segment in the super-saturation state; determining that the state of the intersection includes an imbalance state, in response to the at least two driving-in road segments including a first road segment in the idle state and a second segment not in the idle state; or determining that the state of the intersection includes the idle state, in response to the at least two driving-in road segments including a driving-in road segment in the idle state.

According to the embodiments of the present disclosure, the data determination module 710 may include: an information acquisition sub-module used to acquire a vehicle position information uploaded by a navigation application and a road network information; and a traffic data determination sub-module used to determine the traffic data of each driving-in road segment based on the road network information and the vehicle position information. The road network information includes the attribute data of each driving-in road segment.

In the technical solution of the present disclosure, the acquisition, storage, use, processing, transmission, provision, disclosure and application of the user's personal information involved are all in compliance with the provisions of relevant laws and regulations, and necessary confidentiality measures have been taken, and it does not violate public order and good morals. In the technical solution of the present disclosure, before obtaining or collecting the user's personal information, the user's authorization or consent is obtained.

According to the embodiments of the present disclosure, the present disclosure further provides an electronic device, a readable storage medium, and a computer program product.

FIG. 8 shows a schematic block diagram of an exemplary electronic device 800 for implementing the method of determining the state of the intersection in the exemplary embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 8, the device 800 includes a computing unit 801 which may perform various appropriate actions and processes according to a computer program stored in a read only memory (ROM) 802 or a computer program loaded from a storage unit 808 into a random access memory (RAM) 803. In the RAM 803, various programs and data necessary for an operation of the device 800 may also be stored. The computing unit 801, the ROM 802, and the RAM 803 are connected to each other through a bus 804. An input/output (I/O) interface 805 is also connected to the bus 804.

A plurality of components in the device 800 are connected to the I/O interface 805, including: an input unit 806, such as a keyboard, or a mouse; an output unit 807, such as displays or speakers of various types; a storage unit 808, such as a disk, or an optical disc; and a communication unit 809, such as a network card, a modem, or a wireless communication transceiver. The communication unit 809 allows the device 800 to exchange information/data with other devices through a computer network such as Internet and/or various telecommunication networks.

The computing unit 801 may be various general-purpose and/or a dedicated processing assemblies having processing and computing capabilities. Some examples of the computing units 801 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 801 executes various methods and processing described above, such as the method of determining the state of the intersection. For example, in some embodiments, the method of determining the state of the intersection may be implemented as a computer software program which is tangibly embodied in a machine-readable medium, such as the storage unit 808. In some embodiments, the computer program may be partially or entirely loaded and/or installed in the device 800 via the ROM 802 and/or the communication unit 809. The computer program, when loaded in the RAM 803 and executed by the computing unit 801, may execute one or more steps in the method of determining the state of the intersection described above. Alternatively, in other embodiments, the computing unit 801 may be configured to execute the method of determining the state of the intersection by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a load programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, a magnetic, an optical, an electromagnetic, an infrared, or a semiconductor system, apparatus, or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also known as a cloud computing server or virtual host, which is a host product in the cloud computing service system to solve the defects of difficult management and weak business scalability in the traditional physical host and VPS service ("Virtual Private Server", or "VPS"). The server may also be a server of distributed system or a server combined with block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A method of determining a state of an intersection, wherein the intersection (140) is formed by a convergence of a plurality of road segments comprising at least two driving-in road segments (161, 163), and the method comprises:

    determining (S210) attribute data and traffic data of each driving-in road segment of the at least two driving-in road segments (161, 163);
    determining (S220) a congestion parameter of the each driving-in road segment based on the attribute data and the traffic data;
    determining (S230) a state of the each driving-in road segment by using the congestion parameter of the each driving-in road segment as an input of a predetermined multi-classification model; and
    determining (S240) the state of the intersection (140) based on the states of the at least two driving-in road segments (161, 163).

2. The method of claim 1, wherein the predetermined multi-classification model comprises an ensemble learning model.

3. The method of claim 1 or 2, wherein the determining a congestion parameter of the each driving-in road segment comprises determining a time-related congestion feature value by:

    determining, from a plurality of predetermined time periods, a time period corresponding to the traffic data as a target time period; and
    determining a congestion feature value having a mapping relationship with the target time period based on a predetermined mapping relationship between a time period and a congestion feature value.

4. The method of any one of claims 1 to 3, wherein:

    each driving-in road segment of the at least two driving-in road segments comprises at least one sub road segment, the attribute data of each driving-in road segment comprises attribute data of each sub road segment of the each driving-in road segment, the traffic data of each driving-in road segment comprises traffic data of each sub road segment of the each driving-in road segment, and the traffic data comprises a congestion index, and
    wherein the determining a congestion parameter of the each driving-in road segment comprises determining a weighted congestion index by:

        determining, for each sub road segment of the driving-in road segment, a congestion weight of the each sub road segment with respect to the driving-in road segment, based on the attribute data of the each sub road segment; and
        determining the weighted congestion index based on the congestion weight and the congestion index of each sub road segment.

5. The method of claim 4, wherein the attribute data comprises a length and a position, and the determining a congestion weight of the each sub road segment with respect to the driving-in road segment comprises:

    determining a first sub-weight of the each sub road segment with respect to the driving-in road segment based on the length of the each sub road segment; and
    determining a second sub-weight of the each sub road segment with respect to the driving-in road segment based on the position of the each sub road segment.

**6.** The method of claim 5, wherein the determining the weighted congestion index based on the congestion weight and the congestion index of each sub road segment comprises:

determining a weighted sum of the congestion indexes of the sub road segments of each driving-in road segment based on the first sub-weights, so as to obtain a first weighted index;
determining a weighted sum of the congestion indexes of the sub road segments of each driving-in road segment based on the second sub-weights, so as to obtain a second weighted index; and
determining the weighted congestion index based on the first weighted index and the second weighted index.

**7.** The method of any one of claims 1 to 6, wherein the determining a congestion parameter of the each driving-in road segment comprises determining a congestion proportion coefficient by:

determining a continuous congestion length (L4) of the each driving-in road segment based on the traffic data of the each driving-in road segment; and
determining a ratio of the continuous congestion length to a length of the each driving-in road segment as the congestion proportion coefficient.

**8.** The method of claim 7, wherein the determining a continuous congestion length of the each driving-in road segment comprises:

determining congestion regions of the each driving-in road segment based on a traffic information of the each driving-in road segment; and
determining a distance between an end position of a first region and the intersection as the continuous congestion length,
wherein the first region is one of the congestion regions closest to the intersection.

**9.** The method of any one of claims 1 to 8, wherein the determining a congestion parameter of the each driving-in road segment comprises determining a non-congestion length (L5) by:

determining congestion regions of the each driving-in road segment based on a traffic information of the each driving-in road segment; and
determining a distance between an end position of a second region and an upstream intersection of the intersection as the non-congestion length,
wherein the second region is one of the congestion regions farthest away from the intersection.

**10.** The method of claim 1, wherein the state of each driving-in road segment comprises one of an idle state, a super-saturation state, a congestion state, or an overflow state, and
wherein the determining the state of the intersection comprises at least one of:

determining that the state of the intersection comprises the overflow state, in response to the at least two driving-in road segments comprising a road segment in the overflow state;
determining that the state of the intersection comprises the congestion state, in response to each of the at least two driving-in road segments being in the congestion state or the overflow state;
determining that the state of the intersection comprises the super-saturation state, in response to the at least two driving-in road segments being not in the idle state and the at least two driving-in road segments comprising a road segment in the super-saturation state;
determining that the state of the intersection comprises an imbalance state, in response to the at least two driving-in road segments comprising a first road segment in the idle state and a second segment not in the idle state; or
determining that the state of the intersection comprises the idle state, in response to the at least two driving-in road segments comprising a driving-in road segment in the idle state.

**11.** The method of claim 1, wherein the determining traffic data of each driving-in road segment comprises:

acquiring a vehicle position information uploaded by a navigation application and a road network information; and
determining the traffic data of each driving-in road segment based on the road network information and the vehicle position information,
wherein the road network information comprises an attribute information of each driving-in road segment.

**12.** An apparatus (700) of determining a state of an intersection, wherein the intersection is formed by a convergence of a plurality of road segments comprising at least two driving-in road segments, and
the apparatus (700) comprises:

a data determination module (710) configured to determine attribute data and traffic data of each driving-in road segment of the at least two driving-in road segments;
a parameter determination module (720) configured to determine a congestion parameter of the each driving-in road segment based on the attribute data and the traffic data;
a road segment state determination module (730) configured to determine a state of the each driving-in road segment by using the congestion parameter of the each driving-in road segment as an input of a predetermined multi-classification model; and
an intersection state determination module (740) configured to determine the state of the intersection based on the states of the at least two driving-in road segments.

**13.** The apparatus (700) of claim 12, wherein the predetermined multi-classification model comprises an ensemble learning model.

**14.** The apparatus (700) of claim 12 or 13, wherein the parameter determination module (720) comprises a feature value determination sub-module configured to determine a time-related congestion feature value, and the feature value determination sub-module comprises:

a time period determination unit configured to determine, from a plurality of predetermined time periods, a time period corresponding to the traffic data as a target time period; and
a feature value determination unit configured to determine a congestion feature value having a mapping relationship with the target time period based on a predetermined mapping relationship between a time period and a congestion feature value.

**15.** A non-transitory computer-readable storage medium having computer instructions stored thereon, wherein the computer instructions are configured to cause a computer to implement the method of any one of claims 1 to 11.

100

110  120  130  150  163  162  161  140

FIG. 1

200

```
┌─────────────────────────────────────────┐
│ Attribute data and traffic data of each  │
│ driving-in road segment of the at least  │  S210
│ two driving-in road segments are         │
│ determined                               │
└─────────────────────────────────────────┘
                    │
                    ▼
┌─────────────────────────────────────────┐
│ A congestion parameter of each           │
│ driving-in road segment is determined    │  S220
│ based on the attribute data              │
│ and the traffic data                     │
└─────────────────────────────────────────┘
                    │
                    ▼
┌─────────────────────────────────────────┐
│ A state of each driving-in road segment  │
│ is determined by using the congestion    │
│ parameter of the each driving-in road    │  S230
│ segment as an input of a                 │
│ predetermined multi-classification model │
└─────────────────────────────────────────┘
                    │
                    ▼
┌─────────────────────────────────────────┐
│ The state of the intersection is         │
│ determined based on the states of the    │  S240
│ at least two driving-in road segments    │
└─────────────────────────────────────────┘
```

FIG. 2

300

FIG. 3

400

FIG. 4

500

FIG. 5

600

611
Traffic data

612
Attribute data

621
Congestion feature value

622
Weighted congestion index

623
Congestion proportion coefficient

624
Non-congestion length

630
Congestion feature vector

640

641    642    643    644

645
Majority voting layer

646
Output layer

650
State of driving-in road segment

FIG. 6

700

Data determination module —710

Parameter determination module —720

Road segment state determination module —730

Intersection state determination module —740

FIG. 7

800

Computing unit —801

ROM —802

RAM —803

—804

—805

I/O interface

Input unit —806

Output unit —807

Storage unit —808

Communic -ation unit —809

FIG. 8

## EUROPEAN SEARCH REPORT

**Application Number**

EP 22 18 1838

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 583 639 B (UNIV SHANDONG JIAOTONG) 14 May 2021 (2021-05-14) | 1,3, 9-12,14, 15 | INV. G08G1/01 G06N20/00 |
| Y | * abstract * & US 2022/222556 A1 (ZHANG MENGMENG [CN] ET AL) 14 July 2022 (2022-07-14) * paragraphs [0044] - [0100]; claims 1, 2 * | 2,4-8,13 | |
| X | CN 112 820 105 A (ENJOYOR CO LTD) 18 May 2021 (2021-05-18) | 1,12,15 | |
| Y | * the whole document * | 4-8 | |
| Y | CHEN CHEN ET AL: "Traffic Flow Prediction Based on Deep Learning in Internet of Vehicles", IEEE TRANSACTIONS ON INTELLIGENT TRANSPORTATION SYSTEMS, IEEE, PISCATAWAY, NJ, USA, vol. 22, no. 6, 6 October 2020 (2020-10-06), pages 3776-3789, XP011858052, ISSN: 1524-9050, DOI: 10.1109/TITS.2020.3025856 [retrieved on 2021-05-28] * page 3776 - page 3777 * | 2,13 | |

**TECHNICAL FIELDS SEARCHED (IPC)**

G08G
G06N

The present search report has been drawn up for all claims

| Place of search | Date of completion of the search | Examiner |
|---|---|---|
| The Hague | 18 November 2022 | De Meyer, Doris Anna |

## ANNEX TO THE EUROPEAN SEARCH REPORT
## ON EUROPEAN PATENT APPLICATION NO.

EP 22 18 1838

This annex lists the patent family members relating to the patent documents cited in  the above-mentioned European search report.
The members are as contained in the European Patent Office EDP file on
The European Patent Office is in no way liable for these particulars which are merely given for the purpose of information.

18-11-2022

| Patent document cited in search report | | Publication date | Patent family member(s) | | Publication date |
|---|---|---|---|---|---|
| CN 111583639 | B | 14-05-2021 | CN | 111583639 A | 25-08-2020 |
| | | | US | 2022222556 A1 | 14-07-2022 |
| | | | WO | 2021218235 A1 | 04-11-2021 |
| CN 112820105 | A | 18-05-2021 | NONE | | |

EPO FORM P0459

For more details about this annex : see Official Journal of the European Patent Office, No. 12/82